# EUROPEAN PATENT SPECIFICATION

(11) **EP 0 549 201 B1**
(45) Date of publication and mention of the grant of the patent: **20.03.1996**
(21) Application number: 92311275.9
(22) Date of filing: 10.12.1992
(51) Int. Cl.: H01J 1/34, H01J 29/38, H01J 9/12

(54) **Photocathode for image intensifier tube**
Photokathode für einen Bildverstärker
Photocathode pour tube intensificateur d'images

(30) Priority: 20.12.1991 US 811781
(43) Date of publication of application: 30.06.1993
(73) Proprietor: LITTON SYSTEMS, INC., Woodland Hills California 91367-6675 (US)
(72) Inventor: Kim, Hyo-Sup, Phoenix, Arizona 85044 (US)
(74) Representative: Godsill, John Kenneth

(56) References cited:
- FR-A- 2 075 693
- GB-A- 1 478 453
- US-A- 3 814 996
- US-A- 4 286 373
- US-A- 4 498 225

## Description

The present invention relates to a photocathode for use in an image intensifier tube, e.g. for night vision.

Night vision systems are commonly used by military and law enforcement personnel for conducting operations in low light or night conditions. Night vision systems are also used to assist pilots of helicopters or airplanes in flying at night.

A night vision system converts the available low intensity ambient light to a visible image. These systems require some residual light, such as moon or star light, in which to operate. The ambient light is intensified by the night vision scope to produce an output image which is visible to the human eye. The present generation of night vision scopes utilize image intensification technologies to intensify the low level of visible light and also make visible the light from the infra-red spectrum. The image intensification process involves conversion of the received ambient light into electron patterns and projection of the electron patterns onto a phosphor screen for conversion of the electron patterns into light visible to the observer. This visible light is then viewed by the operator through a lens provided in the eyepiece of the system.

The typical night vision system has an optics portion and a control portion. The optics portion comprises lenses for focusing on the desired target, and an image intensifier tube. The image intensifier tube performs the image intensification process described above, and comprises a photocathode to convert the light energy into electron patterns, a micro channel plate to multiply the electrons, a phosphor screen to convert the electron patterns into light, and a fiber optic transfer window to invert the image. The control portion comprises the electronic circuitry necessary for controlling and powering the optical portion of the night vision system.

The limiting factor of the image intensification tube is the photocathode. The most advanced photocathodes are the third generation, or Gen 3 tubes, which have a long wavelength spectral response cut-off which corresponds to light having a wavelength of 940 nanometers. Thus, infra-red light having wavelengths above that range cannot be seen using the Gen 3 tube. Since there is an abundance of night sky radiation in the longer wavelengths, and various ground elements, such as foliage, have high reflectance at those wavelengths, it would be desirable for a night vision system to be able to receive those wavelengths. In addition, laser beams used by potentially hostile forces for targeting purposes operate at wavelengths of 1060 nanometers, and it would be particularly desirable for a night vision system to be able to detect these laser beams.

It has long been hypothesized by those skilled in the art that a photocathode having an indium-gallium-arsenide (InGaAs) active layer would provide the desired response characteristics. To date, InGaAs had only been used in the reflection mode and not in the transmission mode. Reflection mode refers to a usage of a semiconductor photocathode material in which electrons are emitted from a surface of the semiconductor in response to light energy striking the same surface. Reflection mode usage is typical in semiconductor cathodes housed inside vacuum tubes. Transmission mode refers to a usage of a semiconductor photocathode in which light energy strikes a first surface and electrons are emitted from an opposite surface. Photocathodes as used in modern night vision systems operate in the transmission mode. Reflection mode semiconductors are not suited for use as a photocathode in a compact image intensification tube, since the usage requires the emitted electrons to exit from the photocathode at an end opposite to that which the light energy first engaged the photocathode.

US-A-3814996 proposes a transmissive mode photocathode comprising Ga₁₋ₓInₓAs grown on a GaAs substrate.

However, despite great effort by government and industry technical personnel, a transmission mode InGaAs photocathode could not be manufactured. Designers were not only unable to make the InGaAs layer thin enough to be effective in the transmission mode, but were also unable to make the layer supported with an optical window layer necessary for the photocathode. For a transmission mode photocathode,an active layer thickness of 1 micrometer or less is required to achieve the desired response; however, reflection mode InGaAs layers are typically formed to a thickness of approximately 10 micrometers. The thin and high crystalline quality layers required could not be produced since the InGaAs layer would not be adequately grown to a gallium-arsenide substrate used in manufacturing the semiconductor wafer structure. Moreover, the designers could not match the crystal lattice structure of the InGaAs layer with the other semiconductor layers required in a transmission mode photocathode. Due to these difficulties, most efforts to develop an InGaAs photocathode were ultimately abandoned.

US-4286373-A discloses InGaAs in the active layer of a photocathode, that photocathode also comprising a window layer which has been epitaxially formed on said active layer; an anti-reflective and protective coating on said window layer; a face plate, transmissive to light, bonded onto said coating; and an electrode bonded to edges of said face plate, said window layer and said active layer, said electrode providing a contact for electrical connection between said photocathode and an image intensifier tube, the arrangement being such that a light image illuminating said face plate results in a corresponding electron pattern emitted from said active layer.

According to one aspect of the present invention, such a photocathode is characterised in that the window layer is of a material consisting of aluminium-indium-arsenide (AlInAs).

In that way one is able to provide an improved photocathode structure capable of receiving wavelengths in excess of 940 nanometers and using an InGaAs active layer.

According to a second aspect of the invention, there is provided an image intensifier tube for use in a night vision system, comprising: a photocathode having an active layer of a material consisting of indium-gallium-arsenide to produce an electron pattern corresponding to a viewed image and a window layer which has been epitaxially formed on the active layer; an electron multiplier disposed adjacent to said photocathode to increase the energy of said electrons emitted from said photocathode; and a receiving element for receiving electrons from the electron multiplier, characterised in that the window layer comprises aluminum-indium-arsenide (AlInAs).
According to a third aspect of the invention there is provided a method of manufacturing a photocathode for use in an image intensifier tube, comprising the steps of: providing a base substrate layer of GaAs; epitaxially growing a buffer layer on said substrate layer; epitaxially growing a stop layer of AlInAs on said buffer layer;, epitaxially growing an active layer of a material consisting of indium-gallium-arsenide on said stop layer; epitaxially growing a window layer on said active layer; epitaxially growing a top layer of InGaAs on said window layer; removing said top layer to expose said window layer by use of a selective etching agent; applying an anti-reflective and protective coating on said exposed window layer; bonding a face plate, thermally transmissive to light, to said coating; removing said substrate layer using a selective etching agent; removing said stop layer using a selective etching technique; and attaching an electrode to the edges of said active layer, said window layer, said coating, and said face plate, characterised in that the window layer comprises aluminum-indium-arsenide (AlInAs).

For a better understanding of the invention and to show how the same may be carried into effect, reference will now be made, by way of example, to the accompanying drawings, in which:
Fig. 1 shows an exploded view of an image intensification tube for a night vision system;
Fig. 2 shows a graph depicting the spectral response curves comparing InGaAs with convention Gen 2 and Gen 3 photocathodes;
Fig. 3 shows a graph depicting the spectral response curves for varying concentrations of InGaAs for use in photocathodes;
Fig. 4 shows a schematic diagram of a photocathode configuration; and
Fig. 5 shows a schematic diagram of a multi-layer semiconductor wafer for use in manufacturing a photocathode according to an embodiment of the present invention.

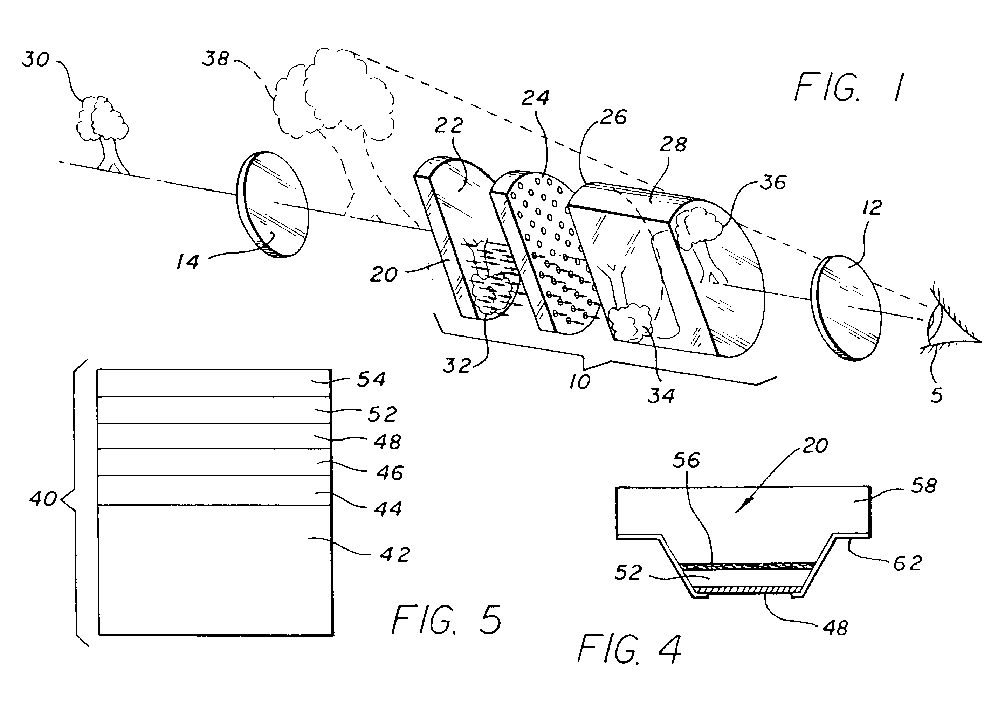

Law enforcement and military forces operating during conditions of near or total darkness have a critical need for night vision systems capable of receiving wavelengths of light in excess of 940 nanometers. Referring first to Fig. 1, there is shown the elements of a night vision system. As will be further described below, the night vision system allows the observer 5 to see tree 30 during conditions of darkness, and even to enlarge the image to form the virtual image of the tree 38.

A night vision system comprises an objective lens 14, a focusing lens 12, and an image intensifier tube 10 between the focusing lens and the objective lens. The image intensifier tube 10 comprises a photocathode 20, a microchannel plate (MCP) 24, a phosphor screen 26 and a fiber optic invertor 28. Ambient light reflected off of tree 30 passes through the objective lens 14 which focuses the light image onto the photocathode 20. It should be apparent that image 32 on the photocathode 20 is inverted after passing through the objective lens 14. The photocathode 20 is formed from a semi-conductor material, such as gallium-arsenide (GaAs). The photocathode 20 has an active surface 22 which emits electrons in response to the focused optical energy in a pattern representing the inverted visual image received through the objective lens 14. The emitting electrons are shown pictorially in Fig. 1 as the plurality of arrows leaving active surface 22. The photocathode 20 is sensitive to certain infra-red light wavelengths as well as light in the visible spectrum, so that electrons are produced in response to the infra-red light which passes through the objective lens and reaches the photocathode 20.

Electrons emitted from the photocathode 20 gain energy through an electric field applied between the photocathode and the microchannel plate 24, and pass through the microchannel plate. The microchannel plate 24 consists of a disk of parallel hollow glass fibers, each of which having a primary cylindrical axis oriented slightly off from the direction of emitted electrons from photocathode 20. The microchannel plate 24 multiplies the number of electrons by multiple cascades of secondary electrons emitted through the channels by loading a voltage across the two faces of the microchannel plate.

The multiplied electrons from the microchannel plate 24 exit the microchannel plate and are energized by a high voltage electric field provided between the microchannel plate and the phosphor screen 26. The electrons strike the phosphor screen 26, which reacts with the electrons, and generates a visible light image corresponding to the image received through objective lens 14. It should be apparent that the phosphor screen 26 acts as a means for converting the electron pattern generated by photocathode 20 to a visible light image of the received image, and that image is shown pictorially at 34 of Fig. 1.

The image 34 from phosphor screen 26 is transmitted through fiber optic invertor 28 to rotate the image to the proper configuration for the observer 5, as shown at 36. The fiber optic invertor 28 is formed from a twisted bundle of optical fibers. Optical fibers are used rather than an ordinary inverting lens to minimize all loss of light energy which would ordinarily exit through the sides of a typical lens. An observer 5 will see a correctly oriented output image 36 through focusing lens 12 as a virtual image 38. In Fig. 1, a virtual image 38 can be magnified in size due to the magnification power of objective lens 14.

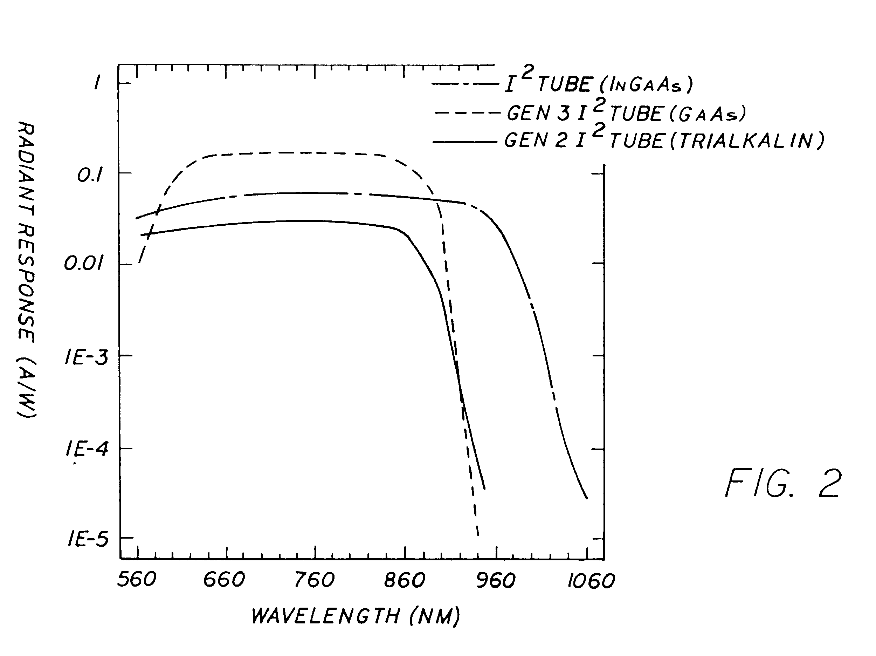

The spectral response of the night vision system is largely dependent upon the photocathode 20. Referring next to Fig. 2, there is shown a typical spectral response curve comparing semiconductor materials for use in a photocathode. The Gen 3 tube using GaAs and the Gen 2 tube using tri-alkali material, are commonly used in the art. The graph shows that their long wavelength spectral response cuts off at a maximum of approximately 940 nanometers of wavelength. However, a photocathode structure using indium-gallium-arsenide (InGaAs) semiconductor material in the active layer would extend the spectral response out to a cutoff of 1,060 nanometers of wavelength.

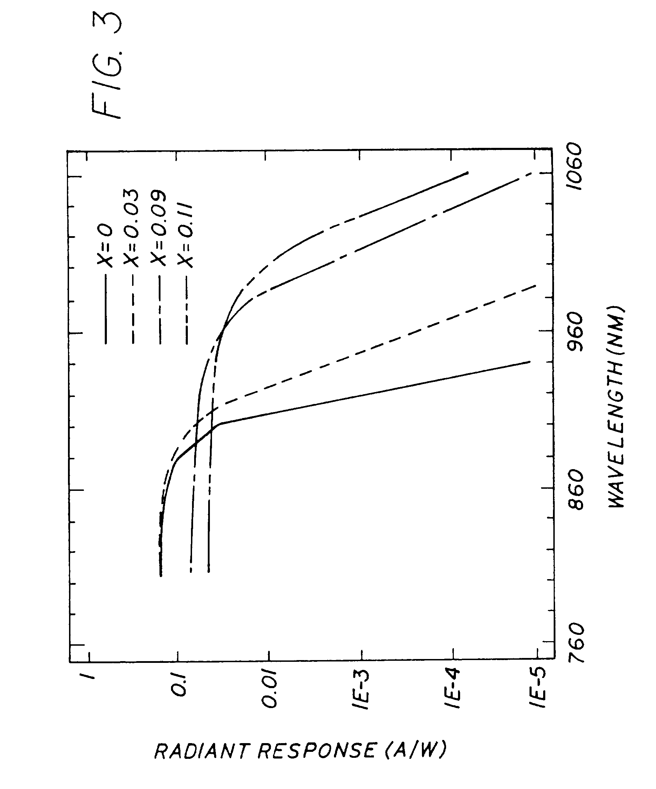

Fig. 3 further shows that as the indium concentration within the InGaAs compound is increased, the long wavelength cutoff of the photocathode can be extended. The compound composition is determined by varying the atomic fraction x of indium in the compound InₓGa₁₋ₓAs. It should be apparent that the long wavelength cutoff desired by the photocathode can be tailored by varying the compound composition.

A photocathode 20 formed from InGaAs material is schematically shown in Fig. 4. Glass face plate 58 is provided at the top of the drawing, forming the surface of the photocathode 20 closest in proximity to objective lens 14. Below face plate 58, a coating 56 is provided. The coating 56 comprises a layer of silicon nitride to provide anti-reflection, and a layer of silicon dioxide for protection. The coating 56 prevents light energy from reflecting out of face plate 58. Next, a window layer 52 is provided to support the active layer as described below. The window layer 52 is formed from aluminum-indium-arsenide (AlInAs) semiconductor material, and acts as a filter to prevent light having shorter wavelengths from passing to active layer 18. Active layer 48 is formed from InGaAs, and converts the optical image received to the electron patterns described above.

The cylindrical edges of the entire photocathode structure 20 is covered by chrome electrode 62. Chrome electrode 62 has an annular surface which is formed to the edges of the glass face plate 58, the coating 56, the window layer 52, and the active layer 48. The chrome electrode 62 provides an electrical connection between the photocathode and the other components of the image intensifier tube 10 described above.

To manufacture a photocathode using InGaAs semiconductor material, a semiconductor wafer must first be formed. A semiconductor wafer utilizing InGaAs is shown schematically in Fig. 5. First, a GaAs substrate 42 is used as a base layer. GaAs is commercially available and preferred since it provides a low defect density single crystal wafer. As will be further described below, the additional layers are epitaxially grown on top of the GaAs substrate 42. The growth conditions need to be optimized for the required composition, dopant level, thickness controls, and also for a high crystalline quality in the layers and at the interface regions, as commonly known in the art.

A buffer layer 44 is then epitaxially grown on the substrate layer 42. The purpose of the buffer layer 44 is to provide a trans it ion between the substrate layer 42, and the subsequent layers, which will be described below. This transition effectively reduces the crystal quality degradation due to the lattice mismatch between the substrate 42 and the crystal layers which will be placed above the substrate layer. The buffer layer 44 also acts to prevent impurities in the substrate layer 42 from diffusing upward into the other semiconductor layers.

There are two techniques available to form the buffer layer 44: the "graded" technique and the "super lattice" technique. The graded technique comprises starting with the GaAs substrate 42, and gradually increasing the percentage of indium in the InGaAs compound during growth of the buffer layer 44. The percentage would increase from 0% to the percentage corresponding with the optimum compound concentration of the active layer 48, which will be described below. Using the graded technique, a total buffer layer 44 thickness of 4 to 5 micrometers is achieved.

The super lattice technique comprises growing extremely thin alternating layers of GaAs and InGaAs, in the same atomic concentration as will be used in the active layer compound, which will be further described below. Each of these individual layers could be as thin as 100 to 150 angstroms, and there could be as many as 10 of each individual layers. Thus, using the super lattice technique, a buffer layer thickness of as little as 0.3 micrometers can be achieved. In addition, the buffer layer 44 can be grown much more quickly using the super lattice technique than in the graded technique, reducing the total time required to manufacture the photocathode. Accordingly, the super lattice technique is preferred over the graded technique.

On top of the buffer layer 44, a stop layer 46 is epitaxially grown. Since the substrate and buffer layers 42 and 44 will be ultimately removed by an etching technique, as will be further described below, the stop layer 46 provides a boundary to prevent further etching into the subsequent layers. The crystal lattice parameter of the stop layer compound can be adjusted by varying the atomic fraction y of indium in the compound Al_{1-y}In_{y}As. In the preferred embodiment of the present invention, atomic fraction y is adjusted so that the AlInAs lattice matches the crystal lattice of the active layer 48.

The active layer 48 is then epitaxially grown on top of the stop layer 46, to a thickness of approximately 2 micrometers. The active layer 48 is formed from a compound of InGaAs in which the percentage of indium is tailored to determine the photo response cutoff, as shown in the drawing of Fig. 3. Efficient negative electron affinity InGaAs photocathodes can be obtained with n compound composition range of less than 0.2 atomic fraction of indium. The compound is doped with a P-type impurity such as Zn or Cd, approximately 10¹⁹ atoms per cubic centimeter level. The thickness of the active layer 48 is anticipated to be approximately 2 micrometers. This thickness will be subsequently reduced, as will be described below, to optimize it to maximize the photocathode's response, or for a special requirement in the spectral sensitivity distribution.

A window layer 52 is then epitaxially grown onto active layer 48. In the completed structure, light can be transmitted through the window layer 52 onto the active layer 48. The window layer 52 acts as a filter to eliminate the undesired higher freqencies (shorter wavelengths) of light from reaching the active layer 48. The window layer 52 has the same chemical composition as the stop layer 46 and is determined for its lattice match to the crystal lattice of the InGaAs active layer 48. This lattice match is critical to the operation of the photocathode; if there is a mismatch between the layers, crystalline defect density in the grown layers would increase. The window layer 52 is doped in the P-type, preferably at the 10¹⁸ atoms per cubic centimeter level. The optical transmission cutoff for the window layer 52 can be achieved by adjusting the composition of window layer 52. It is preferred that an atomic fraction y of 0.2 be provided to achieve a cutoff of 600 nanometers and that a thickness of 1 micrometer be provided to obtain sufficient light transmission and adequate physical support.

Finally, a top layer 54 of InGaAs is epitaxially grown onto window layer 52. The top layer 54 is necessary to protect the intermediate layers during cool-down of the wafer structure 40. It is further intended to provide protection to the window layer 52 so as to prevent impurities from settling onto the window layer.

Once the wafer 40 has been formed and permitted to cool, the top layer 54 is etched away to expose the window layer 52. A selective etching agent for removing the InGaAs would be selected, as commonly known in the art.

After the top layer 54 is removed, a coating 56 is applied onto the upper surface of the window layer 52. The coating is best shown in Fig. 4, which represents a cross-section of the final completed cathode 20. The preferred embodiment of the coating 56 comprises a first layer of silicon nitride. followed by a second layer of silicon dioxide. The silicon nitride provides an anti-reflective surface to prevent ambient light from reflecting off of the photocathode 20. This ensures that the majority of the ambient light received by the night vision system is processed within the image intensifier tube 10. The silicon dioxide provides a protective layer above the silicon nitride. A thickness of 1000 angstroms for each coating is preferred.

The wafer 40 with the top layer 54 removed and the coating 56 applied, is then heated up to a temperature of a few tenths of a degree centigrade below the glass softening point. Using thermal compression bonding techniques commonly known in the art, a glass face plate 58 is thermally bonded to the wafer 40 as best shown in Fig. 4. In the preferred embodiment of the present invention, glass face plate 58 is formed from Corning 7056 or similar glass, of which the thermal expansion coefficient is sufficiently close to the coefficient of the photocathode material. It should be apparent that the softening point temperature is higher than the temperature used in subsequent processes. The combination is then allowed to cool, with the glass face plate 58 forming a unitary structure with the wafer 40.

Next, the base substrate layer 42 and the buffer layer 44 are removed. An etching agent selected for GaAs is used to remove the substrate layer 42, up to and including the buffer layer 44. Then, a selected etching agent for AlInAs is applied to remove the stop layer 46. Since the active layer 48 typically has interface defects, a thin portion of the active layer 48 is also removed using selective etching techniques. As commonly known in the art, the temperature, time, and etching agent are precisely selected to leave an active layer 48 of less than 1 micrometer, or approximately 0. 6 to 0. 9 micrometers of thickness, which is adequate for the present state of the art material quality requirement.

Using a thin film technique commonly known in the art, a chrome electrode 62 is then applied to the circumference of the remaining structure, as best shown in Fig. 4. The chrome electrode 62 provides an electrical contact between the photocathode 20 and the other components of image intensifier tube 10.

Before the photocathode 20 can be used in an image intensifier tube 10, the active layer 48 must be sensitized and then activated. To sensitize the active layer 48, any impurities such as gas, moisture, and oxides which may have attached to the surface must be desorbed off. The surface is selectively etched, and then placed into a vacuum chamber. Heat is applied over the photocathode structure to clean the active layer 48 surface.

To activate the active layer 48, cesium vapor and oxygen are evaporated onto the surface. During the evaporation process, an input light source is provided into the face plate 58 and the output current is measured from the electrode 62. As commonly known in the art, the cesium and oxygen elements are evaporated onto the surface until a maximum sensitivity is detected. Once this maximum sensitivity is achieved, the process is stopped, and the photocathode 20 can be sealed into the image intensifier tube 10.

It should be appreciated by those skilled in the art that various modifications, adaptations, and alternative embodiments of the present invention may be made. For example, alterative materials for the substrate and buffer layers could be selected. The dimensions selected for the layer thicknesses could be altered. Alternative techniques for removing the substrate, buffer and stop layers could be applied.

## Claims

1. A photocathode for use in a transmission mode in an image intensifier tube, comprising:
an active layer (48) of a material consisting of indium-gallium-arsenide (InGaAs);
a window layer (52) which has been epitaxially formed on said active layer;
an anti-reflective and protective coating (56) on said window layer;
a face plate (58), transmissive to light, bonded onto said coating; and
an electrode (62) bonded to edges of said face plate (58), said window layer (52) and said active layer (48), said electrode providing a contact for electrical connection between said photocathode and an image intensifier tube, the arrangement being such that a light image illuminating said face plate (58) results in a corresponding electron pattern emitted from said active layer (48),
characterised in that the window layer (52) is of a material consisting of aluminium-indium-arsenide (AlInAs).

2. A photocathode according to claim 1, wherein the concentration of indium in said active layer (48) is defined by an atomic fraction x in the compound In_{X}Ga₁₋ₓAs.

3. A photocathode according to claim 2, wherein the atomic fraction x is less than 0.2.

4. A photocathode according to claim 1, 2 or 3, wherein the concentration of indium in said window layer (52) is defined by an atomic fraction y in the compound Al_{1-Y}In_{y}As.

5. A photocathode according to claim 6, wherein the atomic fraction y is substantially equal to 0.2.

6. A photocathode according to any one of the preceding claims wherein said coating (56) comprises a first layer of silicon nitride and a second layer of silicon dioxide.

7. A photocathode according to any one of the preceding claims wherein said active layer (48) is doped with a P-type impurity at a level of approximately 10¹⁹ atoms per cubic centimetre.

8. A photocathode according to any one of the preceding claims wherein said window layer (52) is doped with a P-type impurity at a level of approximately 10¹⁸ atoms per cubic centimetre.

9. A photocathode according to any one of the preceding claims wherein said active layer (48) has a thickness of less than 1 micrometer.

10. A photocathode according to any one of the preceding claims wherein said window layer (52) has a thickness of 1 micrometer.

11. A photocathode according to any one of the preceding claims wherein the optical transmission cut-off wavelength for said window layer (52) is 600 nanometres.

12. A photocathode according to any one of the preceding claims wherein the spectral response cut-off wavelength of said photocathode is 1,060 nanometres.

13. A photocathode according to any one of the preceding claims wherein the electrode (62) is of chrome.

14. A photocathode according to any one of the preceding claims wherein the face plate (58) is of glass.

15. A photocathode according to any one of the preceding claims wherein the face plate (58) has been thermally bonded to the coating (56).

16. An image intensifier tube for use in a night vision system, comprising:
a photocathode (20) having an active layer (48) of a material consisting of indium-gallium-arsenide to produce an electron pattern corresponding to a viewed image and a window layer (52) which has been epitaxially formed on the active layer;
an electron multiplier (24) disposed adjacent to said photocathode to increase the energy of said electrons emitted from said photocathode; and
a receiving element (26) for receiving electrons from the electron multiplier,
characterised in that the window layer (52) is of a material consisting of aluminium-indium-arsenide (AlInAs).

17. An image intensifier tube according to claim 16 wherein the electron multiplier (24) comprises a microchannel plate.

18. An image intensifier according to claim 16 or 17 wherein the receiving element (26) is a phosphor screen to illuminate the image formed by said emitted electrons.

19. An image intensifier according to claim 18 comprising an optical invertor (36) to invert the illuminated image produced by said phosphor screen.

20. An image intensifier tube according to any one of claims 16 to 19, wherein said photocathode comprises a photocathode according to any one of claims 1 to 15.

21. A method of manufacturing a photocathode for use in a transmission mode in an image intensifier tube, comprising the steps of:
providing a base substrate layer (42) of GaAs;
epitaxially growing a buffer layer (44) on said substrate layer;
epitaxially growing a stop layer (46) of AlInAs on said buffer layer;
epitaxially growing an active layer (48) of a material consisting of indium-gallium-arsenide on said stop layer;
epitaxially growing a window layer (52) on said active layer;
epitaxially growing a top layer (54) of InGaAs on said window layer;
removing said top layer (54) to expose said window layer (52) by use of a selective etching agent;
applying an anti-reflective and protective coating (56) on said exposed window layer;
bonding a face plate (58), thermally transmissive to light, to said coating;
removing said substrate layer (42) using a selective etching agent;
removing said stop layer (46) using a selective etching technique; and
attaching an electrode (62) to the edges of said active layer, said window layer, said coating, and said face plate
characterised in that the active layer material is of a material consisting of indium-gallium-arsenide (InGaAs) and the window layer (52) comprises aluminum-indium-arsenide (AlInAs).

22. A method according to claim 21, wherein the concentration of indium in said active layer (48) is defined by an atomic fraction x in the compound In_{X}Ga₁₋ₓAs and the concentration of indium in said window layer (52) is defined by an atomic fraction y in the compound Al_{1-y}In_{y}As.

23. A method according to claim 22 wherein said atomic fraction x is less than 0.2 and said atomic fraction y is equal to 0.2

24. A method according to claim 22, 22 or 23 wherein said step of epitaxially growing a buffer layer (44) comprises the steps of epitaxially growing alternating layers of GaAs and InGaAs, in a compound concentration equivalent to that of said active layer compound.

25. A method according to claim 24 wherein each of said alternating layers of GaAs and InGaAs are between 10 and 15 nanometers thick.

26. A method according to claim 24 or 25 wherein said steps of epitaxially growing alternating layers is repeated at least ten times, and that the total thickness of said buffer layer (44) is less than 0.3 micrometers.

27. A method according to claim 24, 25 or 26 wherein said step of epitaxially growing a buffer layer (44) comprises epitaxially growing a layer of In_{X}Ga₁₋ₓAs, and said atomic concentration x is gradually increased from 0 to at least the atomic concentration selected for said active layer.

28. A method according to claim 27 wherein the total thickness of said buffer layer (44) is between 4 and 5 micrometers.

29. A method according to any one of claims 21 to 28 comprising the step of sensitizing said active layer (48) using a selective etching agent followed by heating in a vacuum chamber.

30. A method according to any one of claims 21 to 29 comprising the step of activating said active layer (48) by evaporating cesium vapour and oxygen onto the surface of said active layer.

31. A method according to any one of claims 21 to 30 wherein said step of applying an anti-reflective and protective coating (58) comprises applying a layer of silicon nitride on said exposed window layer (52), and applying a layer of silicon dioxide on said silicon nitride layer.

32. A method according to any one of claims 21 to 31, wherein the face plate (58) is of glass.

33. A method according to any one of claims 21 to 32, wherein the step of bonding the face plate (58) to the coating (56) comprises thermal bonding.

34. A method according to any one of claims 21 to 33, wherein the electrode (62) is of chrome.

35. A method according to any one of claims 21 to 34, wherein the step of attaching the electrode (62) comprises utilising a thin film bonding technique.

## Patentansprüche

1. Eine Photokathode zur Verwendung in einem Durchlaßmodus in einer Bildverstärkerröhre, umfassend:
eine aktive Schicht (48) aus einem Material, das aus Indium-Gallium-Arsenid (InGaAs) besteht;
eine Fensterschicht (52), die epitaktisch auf der genannten aktiven Schicht gebildet worden ist;
eine Vergütungs- und Schutzbeschichtung (56) auf der genannten Fensterschicht;
eine für Licht durchlässige, mit der genannten Beschichtung verbundene Vorderplatte (58); und
eine Elektrode (62), die mit den Rändern der genannten Vorderplatte (58), der genannten Fensterschicht (52) und der genannten aktiven Schicht (48) verbunden ist, wobei die genannte Elektrode einen Kontakt zur elektrischen Verbindung zwischen der genannten Photokathode und einer Bildverstärkerröhre bereitstellt, die Anordnung so ist, daß ein Lichtbild, das die genannte Vorderplatte (58) beleuchtet, ein entsprechendes Elektronenmuster ergibt, das von der genannten aktiven Schicht (48) emittiert wird,
**dadurch gekennzeichnet**, daß die Fensterschicht (52) aus einem Material ist, das aus Aluminium-Indium-Arsenid (AlInAs) besteht.

2. Eine Photokathode gemäß Anspruch 1, in der die Konzentration von Indium in der genannten aktiven Schicht (48) durch einen Atomanteil x in der Verbindung In_{X}Ga₁₋ _{X}As definiert ist.

3. Eine Photokathode gemäß Anspruch 2, in der der Atomanteil x weniger als 0,2 ist.

4. Eine Photokathode gemäß Anspruch 1, 2 oder 3, in der die Konzentration an Indium in der genannten Fensterschicht (52) durch einen Atomanteil y in der Verbindung Al_{1-Y}In_{y}As definiert ist.

5. Eine Photokathode gemäß Anspruch 6, in der der Atomanteil y im wesentlichen gleich 0,2 ist.

6. Eine Photokathode gemäß irgendeinem der vorhergehenden Ansprüche, in der die genannte Beschichtung (56) eine erste Schicht aus Siliciumnitrid und eine zweite Schicht aus Siliciumdioxid umfaßt.

7. Eine Photokathode gemäß irgendeinem der vorhergehenden Ansprüche, in der die genannte aktive Schicht (48) mit einer Verunreinigung vom P-Typ miz einem Wert von ungefähr 10¹⁹ Atomen pro Kubikzentimeter dotiert ist.

8. Eine Photokathode gemäß irgendeinem der vorhergehenden Ansprüche, in der die genannte Fensterschicht (52) mit einer Verunreinigung vom P-Typ mit einem Wert von ungefähr 10¹⁸ Atomen pro Kubikzentimeter dotiert ist.

9. Eine Photokathode gemäß irgendeinem der vorhergehenden Ansprüche, in der die genannte aktive Schicht (48) eine Dicke von weniger als 1 Mikrometer hat.

10. Eine Photokathode gemäß irgendeinem der vorhergehenden Ansprüche, in der die genannte Fensterschicht (52) eine Dicke von 1 Mikrometer hat.

11. Eine Photokathode gemäß irgendeinem der vorhergehenden Ansprüche, in der die optische Durchlaßabschneidewellenlänge für die genannte Fensterschicht (52) 600 Nanometer ist.

12. Eine Photokathode gemäß irgendeinem der vorhergehenden Ansprüche, in der die spektrale Empfindlichkeitsabschneidewellenlänge der genannten Photokathode 1060 Nanometer ist.

13. Eine Photokathode gemäß irgendeinem der vorhergehenden Ansprüche, in der die Elektrode (62) aus Chrom ist.

14. Eine Photokathode gemäß irgendeinem der vorhergehenden Ansprüche, in der die Vorderplatte (58) aus Glas ist.

15. Eine Photokathode gemäß irgendeinem der vorhergehenden Ansprüche, in der die Vorderplatte (58) thermisch mit der Beschichtung (56) verbunden worden ist.

16. Eine Bildverstärkerröhre zur Verwendung in einem Nachtsichtsystem, umfassend:
eine Photokathode (20), die eine aktive Schicht (48) aus einem Material, das aus Indium-Gallium-Arsenid besteht, um ein Elektronenmuster entsprechend einem betrachteten Bild zu erzeugen, und eine Fensterschicht (52) aufweist, die epitaktisch auf der aktiven Schicht gebildet worden ist;
eine Elektronenvervielfachungseinrichtung (24), die der genannten Photokathode benachbart angeordnet ist, um die Energie der genannten Elektronen, die von der genannten Photokathode emittiert worden sind, zu erhöhen; und
ein Empfangselement (26) zum Empfangen von Elektronen von der Elektronenvervielfachungseinrichtung,
**dadurch gekennzeichnet**, daß die Fensterschicht (52) aus einem Material besteht, das aus Aluminium-Indium-Arsenid (AlInAs) besteht.

17. Eine Bildverstärkerröhre gemäß Anspruch 16, in der die Elektronenvervielfachungseinrichtung (24) eine Mikrokanalplatte umfaßt.

18. Ein Bildverstärker gemäß Anspruch 16 oder 17, in dem das Empfangselement (26) ein Leuchtstoffschirm ist, um das Bild zu beleuchten, das von den genannten emittierten Elektronen gebildet ist.

19. Ein Bildverstärker gemäß Anspruch 18, der eine optische Umkehreinrichtung (36) umfaßt, um das beleuchtete Bild umzukehren, das auf dem genannten Leuchtstoffschirm erzeugt worden ist.

20. Eine Bildverstärkerröhre gemäß irgendeinem der Ansprüche 16 bis 19, in der die genannte Photokathode eine Photokathode gemäß irgendeinem der Ansprüche 1 bis 15 umfaßt.

21. Ein Verfahren zum Herstellen einer Photokathode zur Verwendung in einem Durchlaßmodus in einer Bildverstärkerröhre, das die Schritte umfaßt:
Bereitstellen einer Grundsubstratschicht (42) aus GaAs;
epitaktisches Aufwachsen einer Pufferschicht (44) auf der genannten Substratschicht;
epitaktisches Aufwachsen einer Sperrschicht (46) aus AlInAs auf der genannten Pufferschicht;
epitaktisches Aufwachsen einer aktiven Schicht (48) aus einem Material, das aus Indium-Gallium-Arsenid besteht, auf der genannten Sperrschicht;
epitaktisches Aufwachsen einer Fensterschicht (52) auf der genannten aktiven Schicht;
epitaktisches Aufwachsen einer obersten Schicht (54) aus InGaAs auf der genannten Fensterschicht;
Entfernen der genannten obersten Schicht (54) unter Verwendung eines selektiven Ätzmittels, um die genannte Fensterschicht (52) freizulegen;
Aufbringen einer Vergütungs- und Schutzbeschichtung (56) auf der genannten freigelegten Fensterschicht;
thermisches Verbinden einer für Licht durchlässigen Vorderplatte (58) mit der genannten Beschichtung;
Entfernen der genannten Substratschicht (42) unter Verwendung eines selektiven Ätzmittels;
Entfernen der genannten Sperrschicht (46) unter Verwendung einer selektiven Ätztechnik; und
Anbringen einer Elektrode (62) auf den Rändern der genannten aktiven Schicht, der genannten Fensterschicht, der genannten Beschichtung und der genannten Vorderplatte,
**dadurch gekennzeichnet**, daß das Material der aktiven Schicht aus einem Material ist, das aus Indium-Gallium-Arsenid (InGaAs) besteht, und die Fensterschicht (52) Aluminium-Indium-Arsenid (AlInAs) umfaßt.

22. Ein Verfahren gemäß Anspruch 21, in dem die Konzentration an Indium in der genannten aktiven Schicht (48) durch einen Atomanteil x in der Verbindung In_{X}Ga_{1-X}As definiert ist und die Konzentration an Indium in der genannten Fensterschicht (52) durch einen Atomanteil y in der Verbindung Al₁₋ₓIn_{y}As definiert ist.

23. Ein Verfahren gemäß Anspruch 22, in dem der genannte Atomanteil x weniger als 0,2 und der genannte Atomanteil y gleich 0,2 ist.

24. Ein Verfahren gemäß Anspruch 22, 22 oder 23, in dem der genannte Schritt des epitaktischen Aufwachsens einer Pufferschicht (44) die Schritte des epitaktischen Aufwachsens wechselnder Schichten GaAs und InGaAs mit einer Verbindungskonzentration umfaßt, die zu derjenigen der genannten aktiven Schichtverbindung äquivalent ist.

25. Ein Verfahren gemäß Anspruch 24, in dem jede der genannten abwechselnden Schichten aus GaAs und InGaAs zwischen 10 und 15 Nanometern dick ist.

26. Ein Verfahren gemäß Anspruch 24 oder 25, in dem die genannten Schritte des epitaktischen Aufwachsens von abwechselnden Schichten mindestens zehnmal wiederholt werden, und daß die Gesamtdicke der genannten Pufferschicht (44) weniger als 0,3 Mikrometer ist.

27. Ein Verfahren gemäß Anspruch 24, 25 oder 26, in dem der genannte Schritt des epitaktischen Aufwachsens einer Pufferschicht (44) das epitaktische Aufwachsen einer Schicht aus In_{X}Ga₁₋ₓAs umfaßt, und die genannte Atomkonzentration x allmählich von 0 bis mindestens zu der Atomkonzentration erhöht wird, die für die genannte aktive Schicht ausgewählt ist.

28. Ein Verfahren gemäß Anspruch 27, in dem die Gesamtdicke der genannten Pufferschicht (44) zwischen 4 und 5 Mikrometern ist.

29. Ein Verfahren gemäß irgendeinem der Ansprüche 21 bis 28, das den Schritt des Empfindlichmachens der genannten aktiven Schicht (48) umfaßt, wobei ein selektives Ätzmittel verwendet wird, dem Erwärmen in einer Vakuumkammer nachfolgt.

30. Ein Verfahren gemäß irgendeinem der Ansprüche 21 bis 29, das den Schritt des Aktivierens der genannten aktiven Schicht (48) durch Aufdampfen von Cäsiumdampf und Sauerstoff auf die Oberfläche der genannten aktiven Schicht umfaßt.

31. Ein Verfahren gemäß irgendeinem der Ansprüche 21 bis 30, in dem die genannte Schicht des Aufbringens einer Vergütungs- und Schutzbeschichtung (58) umfaßt, eine Schicht aus Siliciumnitrid auf die genannte freigelegte Fensterschicht (52) aufzubringen und eine Schicht aus Siliciumdioxid auf die genannte Siliciumnitrid-Schicht aufzubringen.

32. Ein Verfahren gemäß irgendeinem der Ansprüche 21 bis 31, in dem die Vorderplatte (58) aus Glas ist.

33. Ein Verfahren gemäß irgendeinem der Ansprüche 21 bis 32, in dem der Schritt des Verbindens der Vorderplatten (58) mit der Beschichtung (56) thermisches Verbinden umfaßt.

34. Ein Verfahren gemäß irgendeinem der Ansprüche 21 bis 33, in dem die Elektrode (62) aus Chrom ist.

35. Ein Verfahren gemäß irgendeinem der Ansprüche 21 bis 34, in dem der Anbringungsschritt der Elektrode (62) umfaßt, eine Dünnfilmverbindungstechnik zu verwenden.

## Revendications

1. Photocathode destinée à être utilisée en mode de transmission dans un tube intensificateur d'image comprenant:
une couche (48) active faite d'un matériau constitué d'arséniure d'indium-gallium (InGaAs);
une couche (52) de fenêtre qui a été formée par épitaxie sur ladite couche active;
un revêtement (56) antiréfléchissant et protecteur sur ladite couche de fenêtre;
une plaque (58) avant, transmettant la lumière, liée audit revêtement; et
une électrode (62) liée au bord de ladite plaque (58) avant, de ladite couche (52) de fenêtre et de ladite couche (48) active, ladite électrode assurant un contact pour une connexion électrique entre ladite photocathode et un tube intensificateur d'image, l'agencement étant tel qu'une image de lumière éclairant ladite plaque (58) avant conduit à un motif d'électrons correspondant émis par ladite couche (48) active,
caractérisée en ce que la couche (52) de fenêtre est faite d'un matériau constitué d'arséniure d'aluminium-indium (AlInAs).

2. Photocathode selon la revendication 1, dans laquelle la concentration en indium de ladite couche (48) active est définie par une fraction atomique (x) dans le composé InₓGa₁₋ₓAs.

3. Photocathode selon la revendication 2, dans laquelle la fraction atomique x est inférieure à 0,2.

4. Photocathode selon la revendication 1, 2 ou 3, dans laquelle la concentration en indium de ladite couche (52) de fenêtre est définie par une fraction atomique y dans le composé Al_{1-y}In_{y}As.

5. Photocathode selon la revendication 6, dans laquelle la fraction atomique y est sensiblement égale à 0,2.

6. Photocathode selon l'une quelconque des revendications précédentes, dans laquelle ledit revêtement (56) comprend une première couche de nitrure de silicium et une seconde couche de dioxyde de silicium.

7. Photocathode selon l'une quelconque des revendications précédentes, dans laquelle ladite couche (48) active est dopée par une impureté de type P à raison d'environ 10¹⁹ atomes par centimètre cube.

8. Photocathode selon l'une quelconque des revendications précédentes, dans laquelle ladite couche (52) de fenêtre est dopée par une impureté de type P à raison d'environ 10¹⁸ atomes par centimètre cube.

9. Photocathode selon l'une quelconque des revendications précédentes, dans laquelle ladite couche (48) active a une épaisseur inférieure à 1 micromètre.

10. Photocathode selon l'une quelconque des revendications précédentes, dans laquelle ladite couche (52) de fenêtre a une épaisseur de 1 micromètre.

11. Photocathode selon l'une quelconque des revendications précédentes, dans laquelle la longueur d'onde de coupure de la transmission optique de ladite couche (52) de fenêtre est de 600 nanomètres.

12. Photocathode selon l'une quelconque des revendications précédentes, dans laquelle la longueur d'onde de coupure de la courbe de réponse spectrale de ladite photocathode est de 1060 nanomètres.

13. Photocathode selon l'une quelconque des revendications précédentes, dans laquelle l'électrode (62) est faite de chrome.

14. Photocathode selon l'une quelconque des revendications précédentes, dans laquelle la plaque (58) avant est faite de verre.

15. Photocathode selon l'une quelconque des revendications précédentes, dans laquelle la plaque (58) avant a été liée thermiquement au revêtement (56).

16. Tube intensificateur d'image destiné à être utilisé dans un système de vision nocturne, comprenant:
une photocathode (20) ayant une couche (48) active faite d'un matériau constitué d'arséniure d'indium-gallium pour produire un motif d'électrons correspondant à une image observée et une couche (52) de fenêtre qui a été formée par épitaxie sur la couche active;
un multiplicateur (24) d'électrons disposé de façon adjacente à ladite photocathode pour accroître l'énergie desdits électrons émis par ladite photocathode; et
un élément (26) récepteur pour recevoir des électrons dudit multiplicateur d'électrons,
caractérisé en ce que la couche (52) de fenêtre est faite d'un matériau constitué d'arséniure d'aluminium-indium (AlInAs).

17. Tube intensificateur d'image selon la revendication 16, dans lequel le multiplicateur (24) d'électrons comprend une plaque à microcanaux.

18. Intensificateur d'image selon la revendication 16 ou 17, dans lequel l'élément (26) récepteur est un écran de luminophores servant à éclairer l'image formée par lesdits électrons émis.

19. Intensificateur d'image selon la revendication 18, comprenant un inverseur (38) optique pour inverser l'image éclairée produite par ledit écran de luminophores.

20. Tube intensificateur d'image selon l'une quelconque des revendications 16 à 19, dans lequel ladite photocathode comprend une photocathode selon l'une quelconque des revendications 1 à 15.

21. Procédé de fabrication d'une photocathode destinée à être utilisée en mode de transmission dans un tube intensificateur d'image, comprenant les étapes qui consistent:
à réaliser une couche (42) de substrat de base faite de GaAs;
à faire croître par épitaxie une couche (44) tampon sur ladite couche de substrat;
à faire croître par épitaxie une couche (46) d'arrêt faite d'AlInAs sur ladite couche tampon;
à faire croître par épitaxie une couche (48) active faite d'un matériau constitué d'arséniure d'indium-gallium sur ladite couche d'arrêt;
à faire croître par épitaxie une couche (52) de fenêtre sur ladite couche active;
à faire croître par épitaxie une couche (54) supérieure faite d'InGaAs sur ladite couche de fenêtre;
à retirer ladite couche (54) supérieure pour exposer ladite couche (52) de fenêtre par utilisation d'un agent d'attaque sélective;
à appliquer un revêtement (56) antiréfléchissant et protecteur sur ladite couche de fenêtre exposée;
à lier une plaque (58) avant, transmettant thermiquement la lumière, audit revêtement;
à retirer ladite couche (42) de substrat en utilisant un agent d'attaque sélective,
à retirer ladite couche (46) supérieure en utilisant une technique d'attaque sélective; et
à fixer une électrode (62) aux bords de ladite couche active, de ladite couche de fenêtre, dudit revêtement et de ladite plaque avant,
caractérisé en ce que le matériau de la couche active est fait d'un matériau constitué d'arséniure d'indium-gallium (InGaAs) et en ce que la couche (52) de fenêtre comprend de l'arséniure d'aluminium-indium (AlInAs) .

22. Procédé selon la revendication 21, dans lequel la concentration en indium de ladite couche (48) active est définie par une fraction atomique x dans le composé InₓGa₁₋ₓAs et la concentration en indium de ladite couche (52) de fenêtre est définie par une fraction atomique y dans le composé Al_{1-y}In_{y}As.

23. Procédé selon la revendication 22, dans lequel ladite fraction atomique x est inférieure à 0,2 et ladite fraction atomique y est égale à 0,2.

24. Procédé selon la revendication 21, 22 ou 23, dans lequel ladite étape de croissance épitaxiale d'une couche (44) tampon comprend les étapes consistant à faire croître par épitaxie des couches alternées de GaAs et d'InGaAs, à une concentration en composé équivalente à celle dudit composé de la couche active.

25. Procédé selon la revendication 24, dans lequel chacune desdites couches alternées de GaAs et d'InGaAs ont une épaisseur comprise entre 10 et 15 nanomètres.

26. Procédé selon la revendication 24 ou 25, dans lequel lesdites étapes de croissance épitaxiale de couches alternées sont répétées au moins dix fois, et en ce que l'épaisseur totale de ladite couche (44) tampon est inférieure à 0,3 micromètre.

27. Procédé selon la revendication 24, 25 ou 26, dans lequel ladite étape de croissance épitaxiale d'une couche (44) tampon comprend la croissance épitaxiale d'une couche d'InₓGa₁₋ₓAs, et ladite concentration atomique x est amenée à croître progressivement de 0 jusqu'à au moins la concentration atomique sélectionnée pour ladite couche active.

28. Procédé selon la revendication 27, dans lequel l'épaisseur totale de ladite couche (44) tampon est comprise entre 4 et 5 micromètres.

29. Procédé selon l'une quelconque des revendications 21 à 28, comprenant l'étape consistant à sensibiliser ladite couche (48) active, par utilisation d'un agent d'attaque sélective, suivie d'un chauffage dans une chambre à vide.

30. Procédé selon l'une quelconque des revendications 21 à 29, comprenant l'étape consistant à activer ladite couche (48) active, par évaporation d'une vapeur de césium et d'oxygène sur la surface de ladite couche active.

31. Procédé selon l'une quelconque des revendications 21 à 30, dans lequel ladite étape d'application d'un revêtement (58) antiréfléchissant et protecteur comprend l'application d'une couche de nitrure de silicium sur ladite couche (52) de fenêtre exposée, et l'application d'une couche de dioxyde de silicium sur ladite couche de nitrure de silicium.

32. Procédé selon l'une quelconque des revendications 21 à 31, dans laquelle la plaque (58) avant est faite de verre.

33. Procédé selon l'une quelconque des revendications 21 à 32, dans lequel l'étape de liaison de la plaque (58) avant au revêtement (56) comprend une liaison thermique.

34. Procédé selon l'une quelconque des revendications 21 à 33, dans lequel l'électrode (62) est faite de chrome.

35. Procédé selon l'une quelconque des revendications 21 à 34, dans lequel l'étape de fixation de l'électrode (62) comprend l'utilisation d'une technique de soudage sur couche mince.
